Europäisches Patentamt

European Patent Office

Office européen des brevets

(19)

(11) Veröffentlichungsnummer: **0 174 942 B1**

(12) **EUROPÄISCHE PATENTSCHRIFT**

(45) Veröffentlichungstag der Patentschrift: **11.04.90**

(51) Int. Cl.⁵: **H 04 M 19/08**

(21) Anmeldenummer: **85901002.7**

(22) Anmeldetag: **07.02.85**

(86) Internationale Anmeldenummer:
**PCT/EP85/00034**

(87) Internationale Veröffentlichungsnummer:
**WO 85/03614 15.08.85 Gazette 85/18**

(80) **Verbunden mit 85200471.2/0169584 (europäische Anmeldenummer/Veröffentlichungsnummer) durch Entscheidung vom 30.09.86.**

(54) **SCHALTUNGSANORDNUNG ZUR ELEKTRISCHEN SPEISUNG VON EINRICHTUNGEN IN EINEM FERNSPRECHAPPARAT.**

(30) Priorität: **08.02.84 DE 3404335**
**09.08.84 DE 3429330**

(43) Veröffentlichungstag der Anmeldung:
**26.03.86 Patentblatt 86/13**

(45) Bekanntmachung des Hinweises auf die Patenterteilung:
**11.04.90 Patentblatt 90/15**

(84) Benannte Vertragsstaaten:
**AT BE CH FR GB IT LI LU NL SE**

(56) Entgegenhaltungen:
**EP-A-0 009 127**
**WO-A-84/00270**
**DE-A-2 043 611**
**DE-A-3 206 564**
**DE-A-3 347 765**
**FR-A-2 282 198**
**FR-A-2 465 384**
**FR-A-2 526 183**

(73) Patentinhaber: **Patentverwertungs GmbH Lange & Partner**
**Dr. Theobald-Schrems-Strasse 4**
**D-8400 Regensburg (DE)**

(72) Erfinder: **Moses, Klaus M., Dipl.-Ing.**
**Talstrasse 10g**
**D-6000 Frankfurt am Main 56 (DE)**
Erfinder: **Lange, Heinz, Dipl.-Ing. (FH)**
**Buchenstrasse 6**
**D-6230 Frankfurt am Main 80 (DE)**

(74) Vertreter: **Schickedanz, Willi, Dipl.-Ing.**
**Langener Strasse 68**
**D-6050 Offenbach/Main (DE)**

Courier Press, Leamington Spa, England.

**Beschreibung**

Die Erfindung betrifft eine Schaltungsanordnung zur elektrischen Speisung von Funktionseinheiten in einer Fernsprechteilnehmerstation, mit einem zwischen den Fernsprechleitungen vorgesehenen Querglied, das unmittelbar oder mittelbar mit den Funktionseinheiten verbindar ist und der Schleife die jeweils maximal mögliche Leistung entnimmt.

Technischer Hintergrund der Erfindung

Im Rahmen der Weiterentwicklung moderner Fernsprech-Endgeräte werden diese in zunehmendem Maße mit Funktionseinheiten ausgerüstet, welche die Leistungsfähigkeit und den Bedienkomfort erhöhen. Dazu zählen z.B. durch Tastaturen gesteuerte Wahlgeber mit zugeordneten Speichern, Anzeigen zur Darstellung der gewählten Nummern und Apparatezustände, Lauthöreinrichtungen, Freisprecheinrichtungen, Gebührenerfassungseinrichtungen mit Umrechnungsmöglichkeiten in verschieden Währungeinheiten und dergleichen. Aus Gründen der vereinfachten Anschlußtechnik, des Betriebsverhaltens während eines lokalen Netzausfalls sowie aus übertragungstechnischen Gründen, z.B. aus Gründen der Symmetrie und/oder des Blitzschutzes, ist es erstrebenswert, diese komplexen Geräte ausschließlich aus der Schleife zu speisen.

Für alle Endgeräte, welche innerhalb des Zuständigkeitsbereichs eines Netzbetreibers, z.B. der Postverwaltung, als Haupt- oder Nebenstellen-Anschluß betrieben werden, sind die für die Energieversorgung des Gerätes maßgebenden Parameter genau festgelegt.

Im Bereich der Deutschen Bundepost sind dies üblicherweise der Gleichstromwilderstand des Apparates, der maximal 470 Ohm beträgt, und der Schleifenstrom, der minimal 20 mA beträgt.

Diese Parameter wurden ursprünglich für den Betrieb von einfachen Telefonapparaten festgelegt, wobei der gesamte Schleifenstrom abzüglich des durch das Nachbild fließenden Stroms zum Betrieb des Mikrofons zur Verfügung stand.

Um die in modernen Fernsprech-Endgeräten vorhandenen Funktionseinheiten mit Energie versorgen zu können, ist es notwendig, den Energiebedarf der Sprechkreisschaltung auf ein Minimum zu beschränken, um möglichst viel Energie zum Betrieb der Funktionseinheiten, insbesondere Lauthör- und Freisprech-Empfangsverstärker, bereitzustellen.

Bei Anwendung einer konventionellen Sprechkreisschaltung mit Differentialübertrager wird dies hauptsächlich dadurch erzielt, daß das Nachbild durch einen suzätzlichen Trennkondensator gleichstromfrei gemacht wird und der Mikrofonstrom auf den minimal zulässigen Wert reduziert wird. Sprechkreisschaltungen mit Differentialübertrager haben jedoch den grundsätzlichen Nachteil, daß Sendeenergie des Mikrofons nur zur Hälfte auf die Teilnehmer-Anschlußleitung gelangt, da die andere Hälfte durch das Nachbild verbraucht wird.

Eine Verbesserung läßt sich dann erzielen, wenn die gesamte Ausgangsleistung des Mikrofonverstärkers auf die Teilnehmeranschlußleitung gelangt. Um dies zu erreichen, werden Sprechkreisschaltungen nach dem Kompensationsprincip vorgesehen. Hierbei wird das Ausgangssignal des Mikrofonverstärkers direkt in die Teilnehmeranschlußleitung eingespeist. An einem Summenpunkt des hochohmigen Empfangskreises wird ein vom Mikrofonverstärker abgezweigtes und am Nachbild gespiegeltes Signal gegenphasig überlagert, wodurch die Rückhördämpfung realisiert wird.

Eine Verbesserung läßt sich dann erzielen, wenn die gesamte Ausgangsleitstung des Mikrofonverstärkers auf die Teilnehmeranschlußleitung gelangt. Um dies zu erreichen, werden Sprechkreisschaltungen nach dem Kompensationsprinzip vorgesehen. Hierbei wird das Ausgangssignal des Mikrofonverstärkers direkt in die Teilnehmeranschlußleitung eingespeist. An einem Summenpunkt des hochohmigen Empfangskreises wird ein vom Mikrofonverstärker abgezweigtes und am Nachbild gespiegeltes Signal gegenphasig überlagert, wodurch die Rücklhördämpfung realisiert wird.

Stand der Technik

Es ist bereits eine Schaltungsanordnung für zentral gespeiste Teilnehmerstationen mit Sprechschaltungen, die eine Widerstandsbrücke enthalten, bekannt, bei der die Empfangsverstärkeranschaltung und die Lieferung einer Betriebsspannung für die Steuerung eines Zusatzgeräts mir einem geringstmöglichen Aufwand in der Teilnehmerschleife vorgenommen werden soll (DE—PS 2159149, DE—PS 2159150). Mit dieser bekannten Schaltungsanordnung ist es möglich, beispielsweise zwei Zusatzgeräte anzuschließen und diese gegebenenfalls mit verschieden hohen Konstantströmen zu speisen. Nachteilig ist hierbei jedoch, daß die ausgekoppelte Leistung für die Zusatzeinrichtungen gering ist und keine Rangordnung bezüglich der Verteilung der Leistung auf die einzelnen Zusatzeinrichtungen realisierbar ist.

Es sind weitehin Schaltungsanordnungen zur Stromspeisung einer integrierten Schaltung bekannt, die einen Multikollektor- Transistor aufweisen, mit dem es möglich ist, eine Vielzahl von gleichen oder verschiedenen Transistorstufen aus einer Trockenbatterie zu speisen (DE—PS 2256640, DE—OS 2532397).

Diese Schaltungen haben den Nachteil, daß größere Ströme, wie sie z.B. für den Betrieb von Lauthör- und Freisprech-Endstufen erforderlich sind, nicht effizient verarbeitet werden können. Zweck dieser bekannten Schaltungen ist es, durch verzögertes Einschalten der Transistorstufen beim Einschalten der Betriebsspannungsquelle ein bestimmtes Schaltverhalten zu gewährleisten, doch können keine

EP 0 174 942 B1

Energieversorgungsprioritäten nach dem Überlaufprinzip realisiert werden.

Bei einer weiteren bekannten Schaltungsanordnung für einen Fernsprecher ist ein Speiseglied zur Speisung mindestens eines Verstärkers vorgesehen, das aus einer an die beiden Adern der Teilnehmerleitung angeschlossenen Reihenschaltung eines Impedanzgliedes und eines spannungsbegrenzenden Elementes besteht (CH—PS 592392). Bei dieser Schaltungsanordnung ist das Impedanzglied eine spulenlose, frequenzabhängig gegengekoppelte Transistorschaltung. Eine Energieversorgung von Zusatzgeräten nach Prioritäten ist auch mit dieser Schaltungsanordnung nicht möglich.

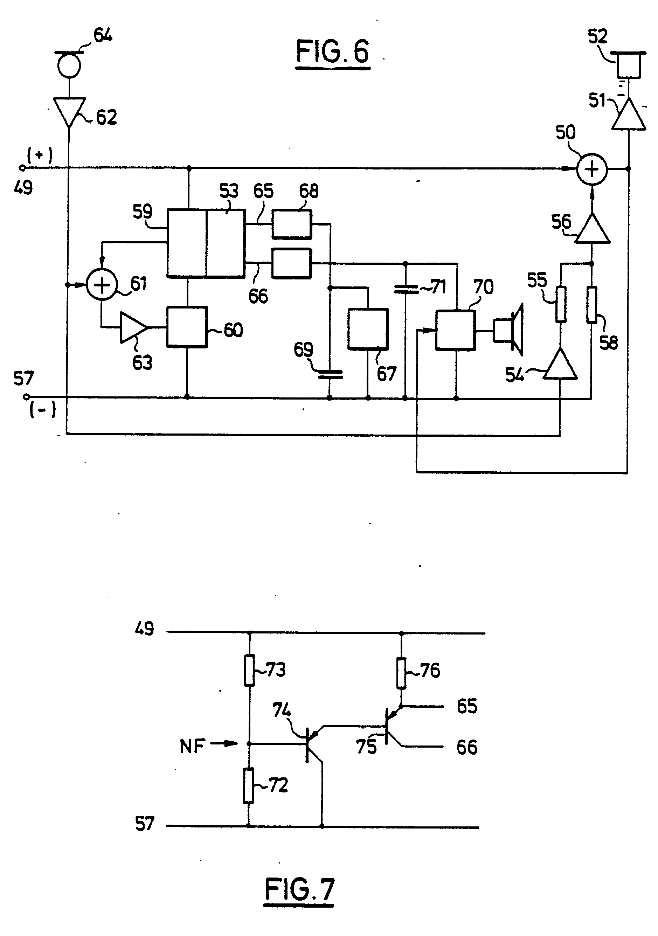

In einer anderen bekannten Telefonteilnehmerstation mit zwei Anschußklemmen für die Teilnehmerleitung sind zwei mögliche Speiseschaltungen zum Speisen von Mikrofon und Verstärker vorgesehen (CH—PS 593592, Fig. 6 u. 7). Diese Speiseschaltungen verwenden jedoch Zenerdioden zur Spannungsstabilisierung, so daß auch bei größeren Speiseströmen aus den Sprechadern nur eine relativ kleine Leistung für die Versorgung von Zusatzeinrichtungen, insbesondere der Lauthör-/Freisprech-Endstufe, auskoppelbar ist.

Aus der US—PS 4133983 ist eine Schaltungsanordnung bekannt, die eine Brückenschaltung für die Verbindung eines Mikrofons und eines Verstärkers an eine Telefonleitung verwendet, welche während des Betriebs eines zugeordneten Tongenerators (MFV Wahlzustand) eine erhöhte Leitungsspannung vorsieht. Die Speisung eines Tonwahlgenerators erfolgt hierbei elektronisch, wobei ein Multikollektor-Transistor vorgesehen sein kann, der mehrere Einrichtungen mit elektrischer Energie versorgt. Eine Energieversorgung nach Prioritäten ist indessen auch bei dieser Schaltungsanordnung nicht möglich.

Bei einer anderen bekannten Schaltunganordnung zur Leitungsspeisung von Teilschaltungen eines Fernsprechapparates wird eine Hör- und Sprechschaltung über einen Stromkonstanthalter mit der Fernsprechleitung verbunden, wobei ein leitungsspannungsabhängig steuerbares Querglied zwischen die Fernsprechleitung und den Stromkonstanthalter geschaltet ist (DE—OS 2938082). Dieses Querglied ist mit den Speiseanschlüssen von Zusatzschaltungen verbunden, wobei die Stabilisierung der Spannung durch eine Zenerdiode erfolgt. Dies hat jedoch den Nachteil, daß auch bei größeren Speiseströmen auf den Sprechadern nur die durch die Minimalspeisung vorgegebene relativ kleine Betriebsspannung genutzt werden kann, wodurch die in der Lauthör-/Freisprech-Endstufe erreichbare Niederfrequenz-Leistung relativ klein ist.

Schließlich ist auch noch eine Schaltungsanordnung zur Leitungsspeisung von Zusatzeinrichtungen eines Fernsprechapparates vorgeschlagen worden, welche eine Reaktanzstufe mit Konstantwiderstandscharakeristik aufweist, wobei die Reaktanzstufe einen Transistor enthält, dessen Emitter über einen Widerstand mit der einen Sprechader und dessen Basis mit dem Mittelabgriff eines Spannungsteilers verbunden ist (nicht vorveröffentlichte DE—OS 3347765). Mit dieser Schaltungsanordnung können indessen keine Stromversorgungsprioritäten eingestellt werden.

Aufgabe

Der Erfindung liegt die Aufgabe zugrunde, eine Schaltungsanordnung für die Leistungsversorgung in einem Fernsprechapparat zu schaffen, welche die Nachteile der bekannten Schaltungsanordnungen nicht aufweist.

Lösung

Diese vorstehende Aufgabe wird erfindungsgemäß dadurch gelöst, daß das Querglied der Schleife die jeweils maximal mögliche Leistung entnimmt und diese einer oder mehreren Einrichtungen optimal zuweist.

Vorteilhafte Wirkungen der Erfindung

Mit der erfindungsgemäßen Schaltungsanordnung ist es möglich, im Rahmen der vom Netzbetreiber vorgegebenen Randbedingungen bei allen Schleifenströmen der Schliefe die maximal mögliche Leistung zu entnehmen und diese auf die einzelnen Funktionseinheiten der Fernsprechteilnehmerschaltung optimal zu verteilen und optimal zu nutzen. Durch die Ausbildung des Querglieds als Rektanzstufe, welche für Gleichstrom eine einstellbare, ggf. nichtlineare, Widerstandcharakteristik darstellt, kann der Schleife bei allen Schleifenströmen immer die maximal mögliche Leistung entnommen werden. Für die Anwendung in Apparaten mit konventioneller Sprechkreisschaltung (Gabelübertrager) stellt das Querglied für Wechselstrom eine hohe Impedanz dar, wodurch nur eine geringe Einfügungsdämpfung verursacht wird.

Für die Anwendung in Apparaten mit elektronischen Sprechkreisschaltungen stellt das Querglied für Wechselstrom die Apparateimpedanz dar. Das Querglied mit hoher Impedanz kann auch in Apparaten mit elektronischen Sprechkreisschaltungen eingesetzt werden, wobei die Eingangsimpedanz des Apparates durch Parallelschaltung komplexer oder reeler Widerstände zum Querglied beliebig eingestellt werden kann.

Ein weiterer Vorteil des Querglieddes besteht darin, daß das Querglied dazu benutzt werden kann, dem Schleifenstrom die vom Mikrofonverstärker oder vom MFV-Wahlgeber stammenden NF- Signale einzuprägen. Dadurch wird die anderweitig notwendige Sendestufe und der dafür notwendige Vorstrom (Mikrofonstrom) eingespart. Dieser Strom steht den Zusatzeinrichtungen als weiterer Speisestrom zur Verfügung. Die dem Querglied nachgeschaltete Stromverteilungsschaltung bietet die Möglichkeit, daß sich

3

jeder daran angeschlossene Verbraucher nur seine zum Betrieb notwendige Energie entnimmt. Dadurch wird der Endstufe des Lauthör- oder Freisprechempfangsverstärkers immer die maximal mögliche Energie zugeführt.

Weiterhin ist es durch die inhärente Strombegrenzung der Ausgänge niederer Priorität möglich, einen großen Pufferkondensator aufzuladen, aus dem die Lauthörendstufe während kurzzeitiger Dynamikspitzen mit zusätzlicher Energie versorgt wird, wodurch diese Dynamikspitzen verzerrungsfrei übertragen werden können.

Die als Querglied oder Reaktanzstufe bezeichnete Schaltungsanordnung kann in die Stromverteilerschaltung integriert werden. Es ist jedoch auch möglich, beide das heißt Querglied und Stromverteilerschaltung isoliert vorzusehen. Beide Lösungsprinzipien besitzen auch für sich alleine genommen erhebliche und für den Fachmann überraschende Vorteile, die sich bei gemeinsamer Anwendung natürlich noch verstärken.

Ausführungsbeispiele der Erfindung sind in der Zeichnung dargestellt und werden im folgenden näher beschrieben.

Beschreibung der Zeichnung

Es zeigen:

Fig. 1 ein vereinfachtes Blockschaltbild eines Fernsprechapparates mit einem Querglied (vergl. auch DE—OS 3347765, Fig. 1);

Fig. 2 ein Querglied, das einen Transistor aufweist (vergl. auch DE—OS 3347765, Fig. 2);

Fig. 3 ein Querglied, das zwei Transistoren aufweist (vergl. auch DE—OS 3347765, Fig. 3);

Fig. 4 ein vereinfachtes Blockschaltbild eines erfindungsgemäßen Fernspechapparates mit einem abgewandelten Querglied;

Fig. 5 eine erfindungsgemäße Schaltungsanordnung für eine Stromverteilerschaltung;

Fig. 6 ein Blockschaltbild eines elektronischen Sprechkreises nach dem Kompensationsprinzip bei einer Fernsprechteilnehmerstation in Verbindung mit einem Querglied;

Fig. 7 eine Detaildarstellung des in der Fig. 6 gezeigten Querglieds;

Fig. 8 ein Querglied mit einem Regelverstärker;

Fig. 9 ein Diagramm, welches eine Eingangswiderstandscharakteristik darstellt;

Fig. 10 eine Stromverteilerschaltung.

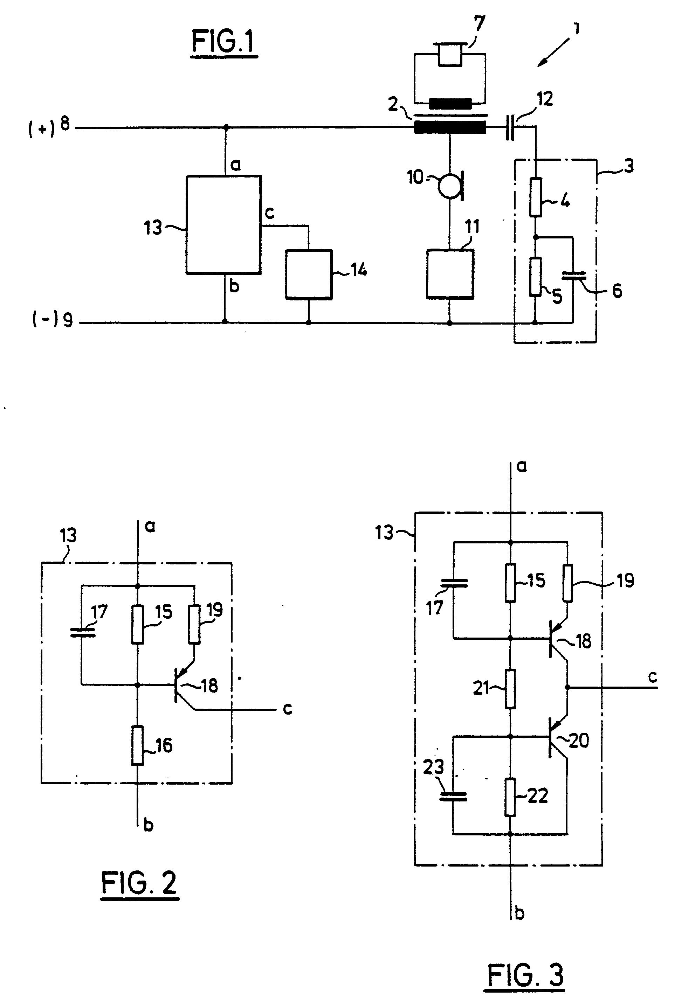

Bei dem in der Fig. 1 gezeigten Blockschaltbild eines Fernsprechapparates sind nur diejenigen Einrichtungen gezeigt, welche zum Verständnis der Erfindung unbedingt notwendig sind. Einrichtungen zur polunabhängigen Anschaltung, zur Wahlkennzeichengabe, der Gabelumschalter usw., sind weggelassen.

Mit Hilfe eines Übertragers 2 wird eine Gabelschaltung 1 gebildet, an welche einerseits die Auschlußleitung und andererseits die Leitungsnachbildung 3 mit zwei Widerständen 4, 5 und einem Kondensator 6 angeschlossen sind. Eine Hörkapsel 7 ist gleichstrommäßig abgetrennt von den Sprechadern 8, 9. Ein Mikrofon 10 erhält einen Konstantstrom aus einer Konstantstromquelle 11, wobei der Strom auf den minimal zulässigen Wert des Mikrofons 10 begrenzt ist. Die Leitungsnachbildung 3 ist gleichstrommäßig von den Sprechadern 8, 9 durch einen Kondensator 12 abgetrennt. Die Gabelschaltung 1 kann entweder mit Hilfe eines Übertragers 2 oder auch mit Hilfe von Halbleiterschaltungen gebildet sein. Zwischen den Sprechadern 8, 9 ist vor der Gebelschaltung ein Querglied 13 in Form einer Reaktanzstufe angeschaltet, welche die Spannung zwischen a—b bei jedem Schleifenstrom innerhalb der zulässigen Grenzen hält und eine Zusatzeinrichtung, beispielsweise eine Lauthöreinrichtung 14, mit Speiseenergie versorgt. Es ist auch denkbar, mehrere Zusatzeinrichtungen and das Querglied 13 anzuschließen, das die Eingangsanschlüsse a, b und den Ausgangsanschluß c besitzt. Dabei sind der Eingangsanschluß a mit der positiven Sprechader 8 und der Eingangsanschluß b mit der negativen Sprechader 9 verbunden.

Eine einfache Schaltungsanordnung zur Verwirklichung einer Reaktanzstufe mit in Grenzen einstellbarer Gleichstromwiderstandscharakteristik ist in der Fig. 2 gezeigt. Ein Transistor ist mit seinem Emitter über einen Widerstand 19 mit dem Anschluß a verbunden. Durch entsprechende Dimensionierung der Widerstände 15 und 16 sowie z.B. einer nicht dargestellten Zenerdiode, die zwischen dem unteren Anschluß des Widerstands 16 und dem Kollektor des Transistors 18 liegt, sind die Nullspannung und der differenzielle Widerstand der Gleichstromcharakteristik in Grenzen einstellbar. Durch einen Kondensator 17, der parallel, zu dem Widerstand 15 geschaltet ist, wird eine sehr hohe Reaktanz für die Sprechwechselspannung erreicht; dies hat eine kleine Einfügungsdämpfung in den Sprechkreis zur Folge. In Abhängigkeit von dem in den Sprechadern 8, 9 (Fig. 1) fließenden Schleifenstrom liefert das Querglied 13 am Ausgang c einen entsprechenden Strom zur Versorgung der Zusatzeinrichtungen, z.B. der Lauthöreinrichtung 14.

In der Fig. 3 ist eine Schaltungsanordnung gezeigt, die zur Stabilisierung der Betriebsspannung für den Verstärker der Lauthöreinrichtung 14 auf einen schleifenstromabhängigen Wert dient. Ein Transistor 20, dessen Emitter mit dem Kollektor des Transistors 18 verbunden ist, stellt eine Parallelstabilisierung der Betriebsspannung des Lauthörverstärkers am Ausgang c dar. Nimmt der Lauthörverstärker beispielsweise durch Übersteuerung einen zu hohen Strom auf, so sperrt der Transistor 20. Der Transistor 18 begrenzt den Strom auf den zulässigen Wert. Die Basen der beiden Transistoren 18, 20 sind über einen Widerstand 21 miteinander verbunden. Parallel zur Basis-Kollektor-Strecke des Transistors 20 liegen ein Widerstand 22

4

und ein Kondensator 23. Der Transistor 18 und auch der Transistor 20 können jeweils durch eine Darlingtonschaltung ersetzt werden, wobei im Falle des Transistors 18 die Einfügungsdämpfung des Querglieds 13 auf einen genügend kleinen Wert gebracht werden kann. Der Kondensator 23 entkoppelt die Betriebsspannung des Lauthörverstärkers vom Sprechkreis.

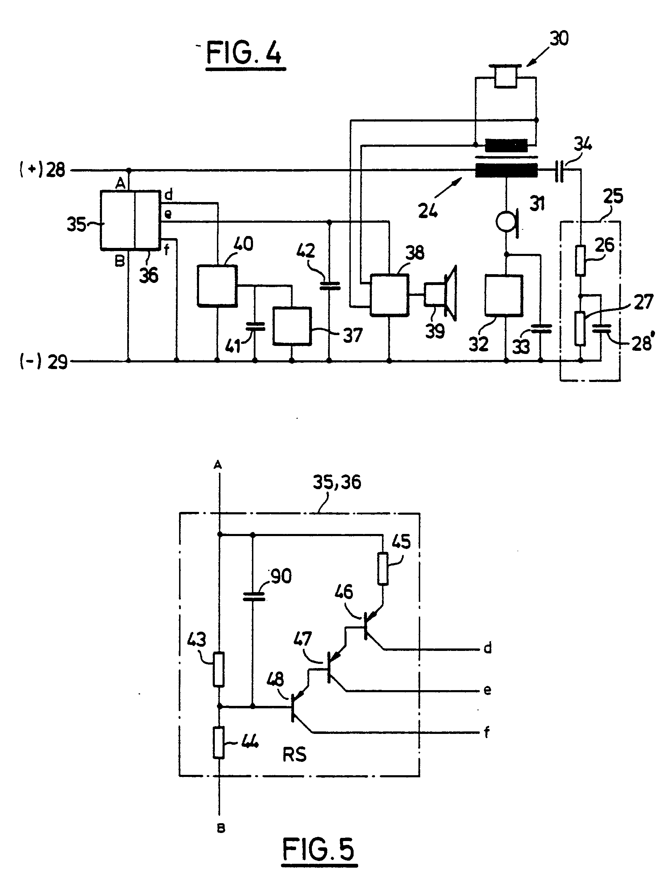

Bei dem in der Fig. 4 gezeigten Blockschaltbild sind weiderum nur diejenigen Einrichtungen gezeigt, die zum Verständnis der Erfindung unbedingt notwendig sind. Mittels eines Übertragers 24 wird hierbei eine Gabelschaltung gebildet, an welcher einerseits die Anschlußleitung und andererseits die Leitungsnachbildung 25 angeschlossen sind. In der Leitungsnachbildung befinden sich zwei in Reihe geschaltete Widerstände 26, 27, sowie ein Kondensator 28'. Letzterer liegt parallel zum Widerstand 27. Gleichstrommäßig abgetrennt von den Sprechadern 28, 29 der Anschlußleitung ist eine Hörkapsel 30. Ein Mikrofon 31 erhält einen Konstantstrom aus einer Konstantstromquelle 32, wobei der Strom auf den minimal zulässigen Mikrofonstrom begrenzt ist. Durch einen Kondensator 33 wird die hohe Impedanz der Konstantstromquelle 32 kompensiert, um die Einfügungsdämpfung der Konstantstromquelle 32 im Mikrofonkreis zu verringern. Die Leitungsnachbildung 25 ist gleichstrommäß von den Sprechadern 28, 29 durch einen Kondensator 12, 34 abgetrennt, um den gesamten Schleifenstrom dem Mikrofon und den Zusatzeinrichtungen zur Verfügung zu stellen. Die Gabelschaltung kann entweder mit Hilfe des Übertragers oder durch entsprechende Halbleiterschaltungen, die Operationsverstärker aufweisen, gebildet sein. Zwischen die Sprechadern 28, 29 ist vor der Gabelschaltung ein Querglied 35 in Form einer Reaktanzstufe geschaltet. Diese Reaktanzstufe liefert, wie weiter unten noch ausführlich beschrieben wird, an mehrere Verbraucher Speiseströme, wobei die Summe dieser Ströme gleich dem Schleifenstrom, abzüglich dem durch die Konstantstromquelle 32 für das Mikrofon 31 gelieferten Speisestrom, ist. Der in die Reaktanzstufe 35 fließende Strom wird durch eine Stromverteilungsschaltung 36 auf die Ausgänge d, e, f, derselben aufgeteilt, wobei der am Ausgang d anliegende Strom zur Speisung einer Steuereinrichtung 37 und der am Ausgang e fließende Strom zur Speisung einer Lauthör- oder Freisprecheinrichtung 38 dient, an die ein Lautsprecher 39 angeschlossen ist. Bei dem Ausführungsbeispiel gemäß Fig. 4 stellt die Einrichtung 38 einen Lauthörverstärker dar, dessen Eingänge parallel zur Hörkapsel 30 geschaltet sind. Der Ausgang f der Stromverteilungsschaltung 36 ist direkt mit der negativen Sprechader 29 verbunden. Die Stromverteilungsschaltung 36 der Reaktanzstufe 35 ist derart ausgebildet, daß am Ausgang d ein Speisestrom gezogen werden kann, welcher maximal dem in die Reaktanzstufe 35 fließenden Strom entspricht. In einem derartigen Fall kann an den Ausgängen e und f kein Strom mehr gezogen werden. Wird nun am Ausgang d ein niedrigerer Strom gezogen, so kann der übrige Strom aus dem Ausgang e gezogen werden, wobei wiederum der Ausgang f stromlos bleibt. Wird dagegen von den Ausgängen d und e kein Strom gezogen, so steht der gesamte in die Reaktanzstufe 35 am Eingang A hineinfließende Strom am Ausgang f zur Verfügung. Da die aus den Ausgängen d bis f fließenden Ströme in die Ader 29 zurückfließen, muß der in die Reaktanzstufe 35 fließende Strom der Schliefenstrom abzüglich dem durch die Konstantstromquelle 32 für das Mikrofon 31 gelieferte Strom sein. Hierdurch wird gewissermaßen ein Überlauf prinzip für Ströme realisiert.

Die Steuereinrichtung 37 kann beispielsweise als Mikroprozessor ausgebildet sein und zur Erfassung der Zustände der Bedienelemente des Fernsprechapparates, zur Erzeugung von Anzeigeinformationen und zur Aussendung der Wahlinformation dienen. Sie wird nicht nur während des Wahlvorgans, sondern für die Dauer der Benutzung des Fernsprechapparates benötigt. Sie weist u.a. eine Abtasteinrichtung zur Erfassung der Schaltzustände von Tasten (Wähltastatur, Erdtaste, Lauthörtaste usw.) auf. Die Steuereinrichtung 37 benötigt eine konstante Betriebsspannung, welche durch einen Spannungsregler 40 aus der von der Stromverteilungsschaltung 35 angebotenen ungeregelten Spannung her- und abgeleitet wird. Ein Kondensator 41, welcher parallel zur Versorgungsspannung geschaltet ist, dient als Stützkondensator. Auf diese Weise wird während der Schleifenunterbrechung bei Impulswahl und bei Gesprächsende die Steuereinrichtung 37 noch für eine bestimmte Zeit mit Energie versorgt.

Da die Steuereinrichtung 37 über den Spannungsregler 40 mit einer konstanten Spannung versorgt wird und nur einen geringen Strom entnimmt, kann der übrige Strom, welcher in die Reaktanzstufe 35 fließt, zur Speisung für die Lauthöreinrichtung 38 verwendet werden. Die Stromverteilungsschaltung 36 der Reaktanzstufe 35 ist derart ausgelegt, daß ein Strombegrenzungseffekt bewirkt wird, da die Summe der an Ausgängen d, e und f gezogenen Ströme den Wert des in die Reaktanzstufe 35 am Eingang A fließenden Stroms nicht überschreiten kann.

Weil der Ausgang d der Stromverteilungsschaltung 36 mit einem geringen Strom belastet ist, tritt dieser Strombegrenzungseffekt praktisch nur am Ausgang e auf.

Um die für die Endstufe der Lauthöreinrichtung 38 zur Verfügung stehenden Energie optimal zu nutzen, ist es vorteilhaft, wegen des besseren Wirkungsgrades grundsätzlich lineare Klasse "B"- Endsutfen oder auch digitale Klasse D-Endstufen einzusetzen. Beide haben die Charakteristik, daß die Stromaufnahme proportional zur Aussteuerung ist. Durch den Einsatz der oben beschriebenen Querglieder wird die Versorgungs-Spannung des Endverstärkers der Lauthöreinrichtung 38 mit größer werdendem Schliefenstrom ebenfalls erhöht. Damit erhöht sich außer der erhältlichen NF-Durchschnittsleistung auch der Aussteurungsbereich und die überbrückbare Dauer von kruzzeitigen Dynamikspitzen. Die zur Überbrückung dieser Dynamikspitzen notwendige Energie wird dabei aus einem Speicherkondensator 42 bezogen, welcher parallel zur Versorgungsspannung geschaltet ist.

In der folgenden Tabelle sind die erhältlichen NF-Durchschnitts- und Spitzenleistungen in Abhängigkeit vom Schleifenstrom zusammengestellt.

| | | | | | |
|---|---|---|---|---|---|
| Is Schleifenstrom (mA) | 20 | 30 | 40 | 50 | 60 |
| $P_{NFØ}$ NF-Durchschnittsleistung (mW) | 9,48 | 64 | 169 | 323 | 526 |
| Verbesserung relative zu $P_{NFØ}$ bei Is=20 mA | 1 | 6,75 | 17,82 | 34,07 | 55,48 |
| $P_{NF}$ Spitzenleitstung (mW) | 62,5 | 144 | 336 | 608 | 960 |
| Verbesserung relativ zu $P_{NF}$ Spitzenleistung bei Is=20 mA | 1 | 2,3 | 5,3 | 9,7 | 15,3 |
| Dynamik/db bezogen auf $P_{NFØ}$ bei Is=20 mA | 8,2 | 11,8 | 15,5 | 18 | 20 |

Dabei wird von einem Lautsprecherwiderstand von 50 Ohm und einem Schleifenstromanteil von Mikrofon 31 und Steuereinrichtung 37 von 14 mA sowie einer Gleichstromwiderstandscharakteristik des Querglieds von 470 Ohm ausgegangen. Eine einfache Schaltungsanordnung zur Verwirklichung eines Querglieds, bestehend aus einer Reaktanzstufe 35 mit konstanter Gleichstromcharakteristik und integrierter Stromverteilungsschaltung 36 ist in Fig. 5 gezeigt.

Die Schaltungsanordnung weist eine Widerstandscharakteristik auf, die durch Widerstände 43, 44, 45 eingestellt werden kann. Als mögliche Werte kommen für die Widerstände 43, 44 der Wert 5, 6 kOhm und für den Widerstand 45 der Wert 100 Ohm in Betracht. Die Schaltungsanordnung stellt im Grunde genommen eine Konstantstromquelle dar, wobei der Spannungsabfall am Widerstand 44 die Basis-Emitterspannung der Transistoren 46, 47, 48 und der Spannungsabfall am Widerstand 45 den Emitterstrom des Transistors 46 bestimmen. Der sich daraus ergebende Kollektorstrom $I_C=I_E-I_B$ ist zu jedem Zeitpunkt konstant. Ebenso ist die Summe der an Ausgängen d, e und f auftretenden Ströme konstant. Durch die in Fig. 5 gezeigte Hintereinanderschaltung der Transistoren 46 bis 48 entsteht die prioritätsmäßige Zuordnung der Ströme zu den Ausgängen d, e und f. Würden z.B. die Ausgänge d, e und f gegen den Ausgang B der Reaktanzstufe 35 kurzgeschlossen, so würde der gesamte Strom aus dem Kollektor des Transistors 46 fließen, da dieser Transistor an der ersten Stelle der Reihenschaltung liegt. Dieser Strom entspricht dem Strom, welcher am Eingang A in die Reaktanzstufe 35 hineinfließt, wobei der Wert des Stroms am Ausgang d konstant bleiben würde, obwohl die Kollektoren der Transistoren 47 und 48 kurzgeschlossen sind. Bleibt der Ausgang d dagegen unbelastet, so gelten die beschriebenen Verhältnisse ebenso für die Ausgänge e und f.

Das Prinzip der in der Fig. 5 gezeigten Schaltungsanordnung ist nicht auf das Ausführungsbeispiel beschränkt, bei dem von drei hintereinander geschaltteten Transistoren ausgegangen wird. Vielmehr sind auch Spannungsverteilungsschaltungen mit mehr oder weniger Ausgängen zur Speisung von Einrichtungen möglich. Bei dem in Fig. 6 gezeigten Blockschaltbild einer Fernsprechteilnehmerstation sind wiederum nur diejenigen Einrichtungen gezeigt, welche zum Verständnis der Erfindung unbedingt notwendig sind. Einrichtungen zur polunabhängigen Anschaltung, zur Wahlkennzeichengabe, sowie der Gabelschalter sind weggelassen.

An einer Sprechader 49 ist über eine Addierstufe 50 und einen Hörverstärker 51 eine Hörkapsel 52 angeschlossen. Die Rückhördämpfung erfolgt durch das Kompensationsprinzip, und zwar dadurch, daß das von einem Sprechverstärker 62 gelieferte Signal über einen Trennverstärker 54 und einen Widerstand 55 einem Verstärker 56 zur Phasendrehung zugeführt wird, wobei das auf die Sprechadern 49, 57 gelangte Mikrofonsignal durch die Addierstufe 50 aufgehoben wird. Entspricht die Leitungsnachbildung 58 der Teilnehmeranschlußleitung, so findet eine vollständige Rückhördämpfung statt.

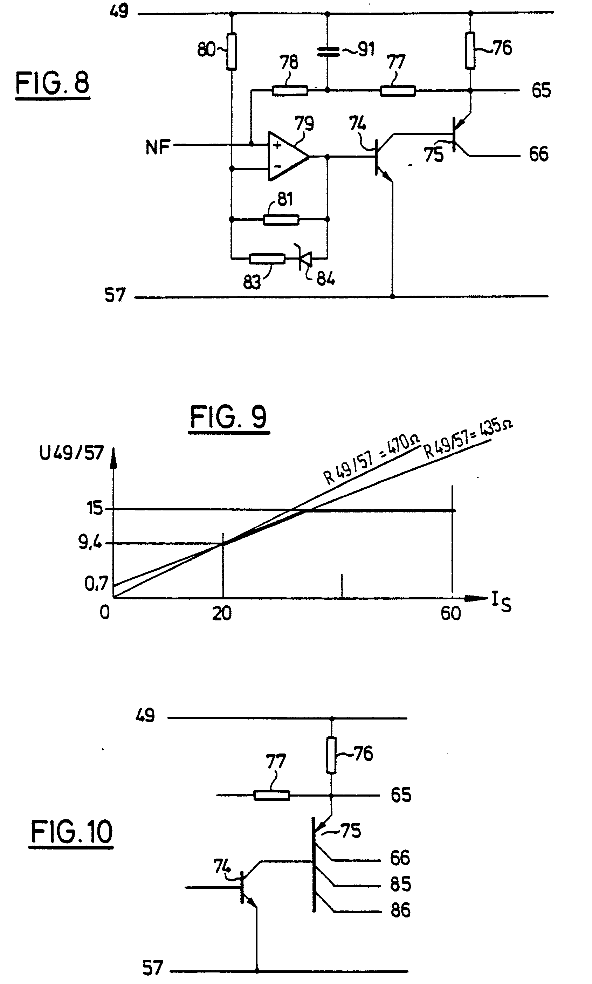

Zwischen den Sprechadern 49, 57 ist ein Querglied vorgesehen, das durch eine Reihenschaltung eines Schleifenstromsensors 59 und eines Shunt-Reglers 60 gebildet ist. Der Schleifenstromsensor 59 liefert ein dem durch das Querglied fließenden Gleichstrom entsprechendes Signal an eine Addierstufe 61, welche über einen Regeiverstärker 63 den Shunt-Regler 60 derart steuert, daß die geforderte Gleichstromwiderstandscharakteristik eingehalten wird. Die Modulation des Schleifenstroms erfolgt nun derart, daß dem vom Schleifenstromsensor 59 kommenden Signal in der Addierstufe 61 die vom Mikrofonverstärker 62 oder von einem nicht dargestellten MFV-Sender kommenden NF-Signale linear überlagert werden. Als Resultat wird die am Apparateeingang 49, 57 anstehende Spannung gemäß den anstehenden NF-Signalen verändert. In der vorangegangenen Beschreibung wurde die Moduilierbarkeit des Quergliedes noch nicht dargelegt. Mögliche Einspeisepunkte für die NF-Signale sind in der Fig. 2 die Basis des Transistors 18, in der nachfolgend beschriebenen Fig. 7 die Basis des Transistors 74 und in der Fig. 8 der nichtinvertierende Eingang des Operationsverstärkers 79.

Am Schliefenstromsensor 59 ist eine Stromverteilungsschaltung 53 angeschlossen, die zwei Ausgänge 65 und 66 aufweist. Am Ausgang 65 ist beispielsweise eine Steuereinrichtung 67 angeschlossen, die etwa als Mikroprozessor ausgebildet sein kann. Sie dient zur Erfassung der Zustände der Bedienelemente der Fernsprechteilhenmerstation, zur Erzeugung von Anzeigeinformationen und zur Aussendung der

EP 0 174 942 B1

Wahlinformationen und wird nicht nur während des Wahlvorgangs, sondern auch für die Dauer der Benutzung der Fernsprechteilnehmerstation benötigt. Sie weist u.a. eine Abtasteinrichtung zur Erfassung der Schaltzustände von Tasten (Wähltastatur, Erdtaste, Lauthörtaste usw.) auf. Die Steuereinrichtung 67 benötigt eine konstante Betriebsspannung, welche durch einen Spannungsregler 68 aus der von der Stromverteilungsschaltung 53 angebotenen ungeregelten Spannung konstant gehalten wird. Ein Kondensator 69, der parallel zur Versorgungsspannung geschaltet ist, dient als Stützkondensator. Auf diese Weise wird während der Schleifenunterbrechung bei Impulswahl uns bei Gesprächsende die Steuereinrichtung 67 noch für eine bestimmte Zeit mit Energie versorgt.

Da die Steuereinrichtung 67 über den Spannungsregler 68 mit einer konstanten Spannung versorgt wird und nur einen geringen Strom aufnimmt, kann der übrige Strom, der am Ausgang der Stromverteilungsschaltung 53 fließt, z.B. zur Speisung einer Lauthör- oder Freisprecheinrichtung 70 verwendet werden.

Die bereits beschriebenen Vorteile, die sich durch die Aufteilung der Ströme nach Prioritäten ergeben, sind in gleichem Maße bei einer Anwendung auf Sprechkreise nach dem Kompensationsprinzip erzielbar. Durch den Wegfall des üblicherweise notwendigen Mikrofon- oder Modulatorvorstroms steht bei Sprechschaltungen gemäß Fig. 6 dieser eingesparte Strom für Speisezwecke zur Verfügung. Er kann genützt werden, um weitere Zusatzeinrichtungen zu versorgen oder um die erzielbare NF-Ausgangsleitung des Lauthör- oder Freisprechverstärkers weiter zu erhöhen.

Die Stromverteilungsschaltung 53 ist derart ausgelegt, daß sie einen Strombegrenzungseffekt bewirkt, da die Summe der an den Ausgängen 65 und 66 gezogenen Ströme den Wert des durch das Querglied fließenden Stroms nicht überschreiten kann. Da der Ausgang 65 der Stromverteilungsschaltung 53 mit einem geringen Strom belastet ist, tritt dieser Strombegrenzungseffekt praktisch nur am Ausgang 66 auf.

Um die für die Endstufe der Lauthöreinrichtung 70 zur Verfügung stehende Energie optimal zu nutzen, ist es vorteilhaft, wegen des besseren Wirkungsgrades grundsätzlich Klasse "B"-Endstufen einsuzetzen. Diese haben die Charakteristik, daß die Stromaufnahme proportional zur Aussteuerung ist.

Durch die besondere Ausbildung des Querglieds wird die Versorgungsspannung des Endverstärkers der Lauthöreinrichtung 70 mit größer werdendem Schleifenstrom ebenfalls erhöht. Damit erhöht sich außer der erhältlichen NF-Durchschnittsleistung auch der Aussteuerungsbereich und die überbrückbare Dauer von kruzzeitigen Dynamikspitzen. Die zur Überbrückung dieser Dynamikspitzen notwendige Energie wird dabei aus einem Speicherkondensator 71 bezogen, der parallel zur Versorgungsspannung geschaltet ist.

Wie sich aus der Fig. 7 ergibt, wird über den Spannungsteiler 72/73 ein Transistor 74 in den leitenden Zustand gesteuert. Der im Emitterkreis eines Transistors 75 liegende Widerstand 76 erfüllt die Funktion des Schleifenstromsensors. Der an ihm entstehende Spannungsabfall ist proportional dem Schleifenstrom und wirkt als Gleichstromgegenkopplung im Ansteuerkreis des Transistors 74.

Durch entsprechende Dimensionierung der Widerstände 72, 73 und 76 kann die Gleichstromcharakteristik (Spannung zwischen den beiden Sprechadern 49/57 als Funktion des Schleifenstroms) in Grenzen verändert werden.

Im folgenden wird die Gleichstromcharakteristik $U_{A/B}=f(I_s)$ bzw. $U_{49/57}$ annähernd berechnet, und zwar für den Fall, daß an den Punkten 49/57, 65 und 66 keine Ströme entnommen werden. Zur Erläuterung sei noch erwähnt, daß in der Fig. 7 der Verbindungspunkt zwischen dem Widerstand 73 und der Leitung 49 dem Anschluß A entspricht, während der Verbindungspunkt zwischen dem Widerstand 72 und der Leitung 57 dem Anschluß B entspricht. Parallel zum Widerstand 73 kann dabei noch ein nicht dargestellter Kondensator vorgesehen sein. Der Anschlußpunkt zwischen dem Emitter des Transistors 75 und dem Widerstand 76 kann als d bezeichnet werden, während der Anschluß des Kollektors der Transistors 75 als e bezeichnet werden kann. Unter diesen Voraussetzung gilt

$$U_{A/B} = U_{49/57} = I_s \times R_{76} + U_{BE75} + U_{BE74} + (I_B + I_Q) \times R_{72}$$

Hierbei ist

$U_{BE74}$ = die Basis-Emitter-Spannung des Transistors 74
$U_{BE75}$ = die Basis-Emitter-Spannung des Transistors 75
$I_B$ = der Basisstrom des Transistors 74
$I_Q$ = der Querstrom im Spannungsteiler $R_{72}/R_{73}$
$U_{BE74}$ und $U_{BE75}$ werden stromunabhängig zusammen mit 1, 4 Volt angenommen.

$$U_{A/B} = I_s \times R_{76} + 1,4\,V + (I_B + I_Q) \times R_{72}$$

$$I_Q = \frac{I_s \times R_{76} + 1,4\,V}{R_{37}}$$

$$\text{dabei ist } I_B = \frac{I_s}{B}$$

und B der Stromverstärkungsfaktor des Transistors 74.

7

Daraus ergibt sich

$$U_{A/B} = U_{49/57} = I_s \times R_{76} + 1{,}4V + \left[ \frac{I_s}{B} + \frac{I_s \times R_{76} + 1{,}4V}{R_{73}} \right] \times R_{72}$$

$$U_{A/B} = 1{,}4V \left(1 + \frac{R_{72}}{R_{73}}\right) + I_s \times R_{76} \left(1 + \frac{R_{72}}{R_{73}}\right) + \frac{I_s}{B} \times R_{72}$$

Diese Gleichung wird dargestellt durch

$$U_{A/B} = U_o + I_s \times R_{A/B}$$

wobei

$$U_o = 1{,}4V \left(1 + \frac{R_{72}}{R_{73}}\right)$$

die Spannung $U_{A/B}$ bei $I_s = O$ darstellt und

$$I_s \times R_{A/B} = I_s \times R_{76} \left(1 + \frac{R_{72}}{R_{73}}\right) + \frac{I_s}{B} R_{72}$$

den Spannungsabfall zum differentiellen Gleichstromwiderstand darstellt.

Bei der in der Fig. 7 gezeigten Schaltung wird der Transistor 74 immer im aktiven und der Transistor 75 immer im gesättigten Zustand betrieben. Die Ausgansspannungen an den Punkten 65 bzw. d und 66 bzw. e sind nahzu dem an der Ader 49 bzw. A anliegenden Spannungswert gleich.

Wird der Schaltung an den Ausgängen 65 bzw. d und/oder 66 bzw. e Strom entnommen, so bleibt bei gegebenem Schleifenstrom der Spannungsabfall am Widerstand 76 konstant, jedoch vermindert sich der Basisstrom im Transistor 74. Damit verringert sich auch der Spannungsabfall am Widerstand 72, mit dem Resultat, daß die Spannung zwischen den Sprechadern mit steigender Belastung an den Punkten 65 und 66 kleiner wird. Es ist ersichtlich, daß zur Kompensation dieses Effekts ein relativ hoher Strom durch das Querglied erforderlich ist.

Während die in der Fig. 7 gezeigte Schaltungsanordnung einen annähernd konstanten Gleichstromeingangswiderstand aufweist, ist es mit Hilfe der in der Fig. 8 gezeigten Schaltungsanordnung möglich, das Gleichstromverhalten der Schaltung ggf. durch nichtlineare Gegenkopplungszweige abschnittsweise einzustellen. Der Schleifenstromsensor in Form des Widerstandes 76, die Stromverteilungsschaltung in Form des Transistors 75 und der Shunt-Regler in Form des Transistors 74 sind ebenso angeordnet wie in der Fig. 7, wobei zu bemerken ist, daß der Transistor 74 sowohl als NPN- oder auch als PNP-Transistor ausgebildet sein kann. Das Signal vom Widerstand 76 gelangt über die Widerstände 77 und 78 zum nicht invertierenden Eingang des Regelverstärkers 79, welcher als Operationsverstärker ausgebildet ist. Der Ausgang des Regelverstärkers 79 ist mit der Basis des als Shunt-Regler wirkenden Transistors 74 verbunden. Der Verstärkungsfaktor des Regelverstärkers 79 wird in bekannter Weise durch das Verhältnis der Widerstände 80 und 81 eingestellt. Der Widerstand 78 hat die Aufgabe, den Eingangswiderstand des Regelverstärkers 79 festzulegen, während der Widerstand 77 zusammen mit einem Kondensator 91 einen Tiefpaß bildet.

Nachfolgend wird das Verhalten der in der Fig. 8 dargestellten Schaltung mathematisch formuliert, und zwar unter der Annahme, daß die Zenerdiode 84 nichtleitend ist. Der Widerstand $R_{76}$ stellt den Schleifenstromsensor dar. Der an ihm auftretende Spannungsabfall ist

$$U_{R76} = I_s \times R_{76}$$

Der Verstärkungsfaktor des Operationsverstärkers 79 wird durch die Widerstände 80 und 81 eingestellt:

$$A = \frac{R_{81}}{R_{80}}$$

Somit ist die Ausgangsspannung am Ausgang des Operationsverstärkers 79

$$U_{79} = A \times U_{R76} = \frac{R_{81}}{R_{80}} \times I_s \times R_{76}$$

# EP 0 174 942 B1

Diese Spannung verursacht am Emitter des Transistors 74 eine Spannung, die etwa 0,7 V unterhalb der Ausgangsspannung des Operationsverstärkers 79 liegt. Somit ist die zwischen 49 und 57 anliegende Spannung

$$U_{49/57} = 0,7\ V + I_s \times \frac{R_{81} \times R_{76}}{R_{80}}$$

Es ist ersichtlich, daß entsprechend der Ableitung für Fig. 7

$$U_o = 0,7\ V$$

und

$$I_s \times R_{A/B} = I_s \times \frac{R_{81} \times R_{76}}{R_{80}}$$

Somit ist der differentielle Widerstand

$$R_{A/B} = \frac{R_{81} \times R_{76}}{R_{80}}$$

Parallel zum Widerstand 81 ist eine Reihenschaltung, bestehend aus einem Widerstand 83 und einer Zenerdiode 84 geschaltet. Mit dieser Maßnahme läßt sich die Gleichstromwiderstandscharackteristik des Querglieds abschnittsweise unterschiedlich einstellen, um beispielsweise die an den Ausgängen 65 bzw.d und 66 bzw.e angeschlossenen Verbraucher nicht spannungsmäßig zu überlasten. Wird der Schleifenstrom so groß, daß die Ausgangsspannung des Operationsverstärkers die Zenerspannung übersteigt, so stellt sich ein kleinerer Verstärkungsfaktor ein, wodurch sich der differentielle Widerstand entsprechend verkleinert. Auf eine mathematische Behandlung dieses Zustandes wird verzichtet. Wird beispielsweise eine Reihenschaltung, bestehend aus einer Zenerdiode mit einer Durchbruchspannung von 15 V und einem Serienwiderstand von O Ohm eingesetzt, so steigt die Spannung an den Ausgängen 65 bzw.d und 66 bzw.e mit größer werdendem Schleifenstrom bis zu einem Wert von 15 V, um dann bei noch größer werdendem Schleifenstrom diesen Wert nicht mehr zu überschreiten. Hierbei liegt der Wert des Widerstands 83 bei O Ohm. Durch die Wahl eines entsprechenden Wertes des Widerstands 83 läßt sich der in der Fig. 9 gezeigte waagrechte Teil steigend verändern.

Für den Fall, daß mehr als zwei Verbraucher oder Verbrauchergruppen an die Stromverteilungsschaltung angeschlossen werden sollen, ist es möglich, durch eine Kaskadenschaltung einer entsprechenden Zahl von Transistoren 75 die entsprechenden Ausgänge zu schaffen (vergl. Fig. 5). Dabei entspricht die Summe der an den Ausgängen d, e und f maximal entnehmbaren Strömen dem in die Schaltung hineinfließenden Strom. Die in der Fig. 5 gezeigte Erweiterungsmöglichkeit der Verteilerschaltung um weitere priorisierte Ausgänge ist auf die in der Fig. 8 gezeigte Schaltung entsprechend anwendbar. in dieser Fig. 8 könnte der Ausgang 65 mit d, der Ausgang 66 mit 3 und der Emitter des Transistors 74 mit f bezeichnet werden. Die Anschlüsse 49 und 57 entsprechen den Anschlüssen A bzw. B.

Anstelle der Kaskadenschaltung kann auch ein Transistor 75 eingesetzt werden, der als Multikollektor-Transistor ausgebildet ist und eine der Anzahl der Verbraucher entsprechende Anzahl von Kollektoren aufweist. Dieser Multikollektor- Transistor muß eine innere Struktur aufweisen, die eine Leistungsvorsorgung nach Prioritäten zuläßt.

Andere elektronische Schaltmittel, mit denen eine prioritätsmäßige Leistungszuführung realiserbar ist, sind ebenfalls denkbar. So könnten beispielsweise die Zusatzgeräte mit einprogrammierten Prioritäten versehen werden, die über Steuerelektroden von Thyristoren oder dergleichen die ihnen zustehende Leistung abrufen.

Bei den in den Figuren lediglich als Blöcke dargestellten Schaltungsordnungen handelt es sich um an sich bekannte Einrichtungen, so daß sich eine nähere Darstellung erübrigt. Beispielsweise kann die Konstantstromquelle 11 in Fig. 1 dadurch realisiert werden, daß die Basis eines Transistors mit der Anode einer Zenerdiode verbunden ist, deren Kathode über einen Widerstand sowohl an dem Emitter dieses Transistors, als auch über einen Kondensator am Kollektor dieses Transistors liegt. Das Mikrofon ist bei einer solchen Schaltung mit seinem einem Anschluß mit dem Kollektor des Transistors und mit dem anderen Anschluß über einen Widerstand und der Basis dieses Transistors verbunden.

## Patentansprüche

1. Schaltungsanordnung zur elektrischen Speisung von Funktionseinheiten (14; 40; 37, 38; 67, 70) in einer Fernsprechteilnehmerstation, mit einem zwischen den Fernsprechleitungen vorgesehenen Querglied (13; 35, 36; 59, 53, 60), das unmittelbar oder mittelbar mit den Funktionseinheiten (14; 40; 37, 38; 67, 70) verbindbar ist und der Schleife die jeweils maximal mögliche Leistung entnimmt, dadurch gekennzeichnet, daß das Querglied (13; 35, 36; 59, 53, 60) die entnommene Leistung den Funktionseinheiten (14; 40; 37, 38; 67, 70) nach Prioritäten zuweist, wobei einer oder mehreren Funktionseinheiten (14; 40; 37, 38; 67, 70) nur jeweils diejenige Leistung zugeführt wird, die für den Betrieb der jeweiligen Funktionseinheit (14; 40; 37, 38; 67, 70) erforderlich ist.

2. Schaltungsanordnung nach Anspruch 1, dadurch gekennzeichnet, daß das Querglied (13; 35, 36; 59, 60, 53) eine Reaktanzstufe mit konstanter Gleichstromwiderstandscharakteristik ist.

3. Schaltungsanordnung nach Anspruch 1 oder 2, dadurch gekennzeichnet, daß das Querglied (13; 35, 36; 59, 53) für Gleichstrom einen einstellbaren konstanten Widerstand darstellt.

4. Schaltungsanordnung nach einem oder nach mehreren der vorangegangenen Ansprüche, dadurch gekennzeichnet, daß das Querglied (13; 35, 36; 59, 53) für Wechselstrom eine hohe Impedanz darstellt.

5. Schaltungsanordnung nach einem oder nach mehreren der vorangegangenen Ansprüche, dadurch gekennzeichnet, daß das Querglied (13; 35, 36; 59, 53, 60) durch ein NF-Signal, z.B. Ausgangssignal des Mikrofonverstärkers (62) steuerbar ist.

6. Schaltungsanordnung nach Anspruch 5, dadurch gekennzeichnet, daß das vom Mikrofon (10, 31, 64) oder MFV-Wahlgeber stammende NF-Signal dem Schleifenstrom der Teilnehmerschaltung aufmoduliert ist.

7. Schaltungsanordnung nach Anspruch 6, dadurch gekennzeichnet, daß während der negativen Halbwellen des NF-Signals der Schleifenstrom an den mit Versorgungsausgängen verbundenen Stützkondensatoren (69, 71) vorbeigeführt wird, um nichtlineare Verzerrungen des NF-Signals auf der Leitung zu verhindern.

8. Schaltungsanordnung nach einem oder nach mehreren der vorangegangenen Ansprüche, dadurch gekennzeichnet, daß der Schleifenstrom derart prioritätsmäßig den Funktionseinheiten (14; 40; 37, 38; 67, 70) zugeführt wird, daß Einheiten mit höherer Priorität stets zuerst versorgt werden.

9. Schaltungsanordnung nach einem oder nach mehreren der vorangegangenen Ansprüche, dadurch gekennzeichnet, daß den Funktionseinheiten (14; 40; 37, 38; 67, 70) mit niederer Priorität ein maximaler Strom

$$I_{nmax} = I_s - \sum_{1}^{n-1} I_n$$

zugeführt wird, wobei

$I_s$ = verfügbarer Schleifenstrom
$I_{nmax}$ = Strom der Zusatzeinrichtung mit n-ter Priorität.

10. Schaltungsanordnung nach einem oder nach mehreren der vorangegangenen Ansprüche, dadurch gekennzeichnet, daß eine Stromverteilerschaltung (36, 53) vorgesehen ist, von deren Ausgang mit niedrigster Priorität der nicht benötigte Schleifenstrom abgeleitet wird.

11. Schaltungsanordnung nach einem oder nach mehreren der vorangegangenen Ansprüche, dadurch gekennzeichnet, 'daß die Ausgänge (e, f) niederer Priorität der Stromverteilerschaltung (36, 53) kurzschließbar sind, ohne daß hierdurch die Eingangscharakteristik beeinflußt wird und ohne daß die an den Ausgängen (d) höherer Priorität abfließenden Ströme verändert werden.

12. Schaltungsanordnung nach einem oder nach mehreren der vorangegangenen Ansprüche, dadurch gekennzeichnet, daß die Stromverteilerschaltung (36, 53) an ihren Ausgängen (d, e, f) Spannungen abgibt, die so nahe wie möglich an der vom Querglied (13; 35, 36; 59, 53) eingestellten Spannung liegen.

13. Schaltungsanordnung nach einem oder nach mehreren der vorangegangenen Ansprüche, dadurch gekennzeichnet, daß Funktionseinheiten, welche keine Unterbrechung der Stromversorgung tolerieren können (z.B. Wahlprozessoren) an die Ausgänge (d) höherer Priorität der Stromverteilerschaltung (36, 53) angeschlossen sind.

14. Schaltungsanordnung nach einem oder nach mehreren der vorangegangenen Ansprüche, dadurch gekennzeichnet, daß Funktionseinheiten, welche in Abhängigkeit vom Betriebszustand sehr hohe Ströme aufnehmen können, z.B. die Endstufe des Lauthörverstärkers, an einen strombegrenzenden Ausgang niederer Priorität angeschlossen sind.

15. Schaltungsanordnung nach einem oder nach mehreren der vorangegangenen Ansprüche, dadurch gekennzeichnet, daß Funktionseinheiten mit höherer Priorität mit jeweils ihrem Sollwert an Spannung oder Strom versorgt wird, bevor eie Einheit mit der nächst niedrigeren Priorität Spannung oder Strom erhält.

16. Schaltungsanordnung nach einem oder nach mehreren der vorangegangenen Ansprüche, dadurch gekennzeichnet, daß ein den Speisestrom des Mikrofons der Sprechschaltung (31) des Fernsprechapparates begrenzender Stromkonstanthalter vorgesehen ist.

17. Schaltungsanordnung nach einem oder nach mehreren der vorangegangenen Ansprüche, dadurch gekennzeichnet, daß der gesamte von der Verteilerschaltung (36) zu verteilende Strom gleich dem Schliefenstrom minus dem der Hör- und Sprechschaltung zugeführten Strom ist.

18. Schaltungsanordnung nach einem oder nach mehreren der vorangegangenen Ansprüche, dadurch gekennzeichnet, daß eine gleichstrommäßig von den Sprechadern (8, 9; 28, 29; 49, 57) abgetrennte Leitungsnachbildung (3, 25) vorgesehen ist.

19. Schaltungsanordnung nach einem oder nach mehreren der vorangegangenen Ansprüche, dadurch gekennzeichnet, daß das Querglied (35) für Speisung von Funktionseinheiten (40, 37, 38) mehrerer Prioritätsklassen einen Spannungteiler aufweist, der aus zwei hintereinander-geschalteten Widerständen (43, 44) besteht, daß zwischen dem Mittenabgriff des Spannungsteilers und dem einen Anschluß (A) des Querglieds (35) ein Kondensator (90) geschaltet ist, wobei dieser Anschluß (A) über einen dritten Widerstand (45) und den Emitter eines ersten Transistors (46) verbunden ist, daß die Basis dieses Transistors (46) mit dem Emitter eines zweiten Transistors (46) verbunden ist, daß die Basis dieses zweiten Transistors (46) mit dem Emitter eines dritten Transistors (48) verbunden ist und daß die Basis dieses dritten Transistors (48) mit dem Mittenabgriff des Spannungsteilers verbunden ist, wobei an den Kollektoren der Transistoren (46, 47, 48) die Ströme zur Speisung der Funktionseinheiten abgenommen werden.

20. Schaltungsanordnung nach Anspruch 19, dadurch gekennzeichnet, daß der Kollektor des dritten Transistors (48) mit dem Ausgang (B) des Querglieds (36) verbunden ist.

21. Schaltungsanordnung nach einem oder mehreren der vorangegangenen Ansprüche, dadurch gekennzeichnet, daß als Funktionseinheit ein Lauthör- und/oder Freisprechverstärker (38) vorgesehen ist, dessen Endstufe als Klasse "B"- Endstufe oder Klasse "D"-Endstufe ausgebildet ist.

22. Schaltungsanordnung nach Anspruch 21, dadurch gekennzeichnet, daß parallel zu den Speiseanschlüssen des Lauthör- und/oder Freisprechverstärkers (38) ein Speicherkondensator (42) geschaltet ist.

23. Schaltungsanordnung nach einem oder mehreren der vorangegangenen Ansprüche, dadurch gekennzeichnet, daß die Verteilerschaltung (36) eine Stromverteilerschaltung ist und die Spannungen der Speiseströme ungeregelt sind.

24. Schaltungsanordnung nach einem oder mehreren der vorangegangenen Ansprüche, dadurch gekennzeichnet, daß die Spannungen der Speiseströme geregelt sind.

25. Schaltungsanordnung nach einem oder mehreren der vorangegangenen Ansprüche, dadurch gekennzeichnet, daß die Gleichstromeingangscharakteristik abschnittsweise unterschiedliche Gleichstromwiderstandswerte aufweist.

26. Schaltungsanordnung nach einem oder mehreren der vorangegangenen Ansprüche, dadurch gekennzeichnet, daß eine Sprechschaltung mit Rückhördämpfung nach dem Kompensationsprinzip vorgesehen ist.

27. Schaltungsanordnung nach einem oder mehreren der vorangegangenen Ansprüche, dadurch gekennzeichnet, daß die Schleifenstromsensor (59) und ein Shunt-Regler (60) in Reihe geschaltet sind, wobei ein Gleichstromausgangssignal des Schleifenstromsensors (59) dem Shunt-Regler (60) zugeführt wird, und daß das Wechselstromsignal des Mikrofons (64) bzw. des MFV-Senders des Fernsprechapparates dem Gleichstromausgangssignal des Schleifensensors (59) überlagert wird, so daß durch den Shunt-Regler (60) eine Modulation des durch den Shunt-Regler (60) fließenden Gleichstroms erfolgt.

28. Schaltungsanordnung nach einem oder mehreren der vorangegangenen Ansprüche, dadurch gekennzeichnet, daß zwischen die Sprechadern (49, 57) ein Spannungsteiler, bestehend aus einer Reihenschaltung zweier Widerstände (72, 73) geschaltet ist, dessen Mittenabgriff mit der Basis eines ersten Transistors (74) verbunden ist, daß der Kollektor dieses Transistors (74) an der einen Sprechader (57) angeschlossen ist, dessen Emitter mit der Basis eines zweiten Transistors (75) verbunden ist, daß der Emitterwiderstand (76) mit der anderen Sprechader (49) verbunden ist und daß die Mikrofon- bzw. MFV-Signale der Basis des ersten Transistors (74) zugeführt werden.

29. Schaltungsanordnung nach einem oder mehreren der vorangegangenen Ansprüche, dadurch gekennzeichnet, daß an der einen Sprechader (57) der Emitter eines ersten Transistors (74) angeschlossen ist, dessen Kollektor mit der Basis eines zweiten Transistors (75) verbunden ist, daß der Emitterwiderstand (76) des zweiten Transistors (75) an der anderen Sprechader (49) angeschlossen ist, daß mit der Basis des ersten Transistors (74) der Ausgang eines Regelverstärkers (79) verbunden ist, dessen invertierender Eingang an dem Mittenabgriff der Reihenschaltung zweier Widerstände (80, 81), die zwischen dem Ausgang des Regelverstärkers (79) und der anderen Sprechader (49) liegt, verbunden ist und daß der mit dem Mikrofon- bzw. MFV-Signal beaufschlagte, nicht invertierende Eingang des Regelverstärkers (79) über einen Widerstand (78) mit dem Emitter des zweiten Transistors (75) verbunden ist.

30. Schaltungsanordnung nach Anspruch 29, dadurch gekennzeichnet, daß zwischen dem Widerstand (78) und dem Emitter des zweiten Transistors (75) ein Tiefpaß (77, 91) geschaltet ist.

31. Schaltungsanordnung nach einem oder mehreren der vorangegangenen Ansprüche, dadurch gekennzeichnet, daß parallel zu dem zwischen dem Ausgang und dem invertierenden Eingang des Regelverstärkers (79) liegenden Widerstands (81) eine Reihenschaltung eines Widerstandes (83) und einer Zenerdiode (84) geschaltet ist.

32. Schaltungsanordnung nach Anspruch 31, dadurch gekennzeichnet, daß der zweite Transistor (75) als Multikollektor- Transistor ausgebildet ist, wobei an jedem Kollektor eine Funktionseinheit anschließbar ist.

33. Schaltungsanordnung nach einem oder mehreren der vorangegangenen Ansprüche, dadurch gekennzeichnet, daß die Gleichstromeingangscharakteristik stetig-nicht-linear ist.

34. Schaltungsanordnung nach einem oder mehreren der vorangegangenen Ansprüche, dadurch gekennzeichnet, daß während einer solchen Aussteuerungsphase der Endstufe des Lauthör- oder Freisprechverstäkers (38, 70), in welcher der von dieser Endstufe gezogene Strom denjenigen Strom übersteigt, der vom dem Ausgang (e, 66) der Stromverteilerschaltung (36, 53) geliefert wird, der zusätzlich benötigte Strom aus einem Kondensator (42, 71) entnommen wird.

# EP 0 174 942 B1

**Revendications**

1. Circuit d'alimentation électrique d'unités fonctionnelles (14; 40; 37, 38; 67, 70) d'un poste téléphonique comportant un organe transversal (13; 35, 36; 59, 53, 60) prévu entre les lignes téléphoniques, qui peut être relié directement ou indirectement aux unités fontionnelles (14; 40; 37, 38; 67, 70), et qui prélève de la boucle à chaque fois la puissance maximale possible, caractérisé en ce que l'organe transversal (13; 35, 36; 59, 53, 60) affecte la puissance prélevée au unités fonctionnelles (14; 30; 37, 38; 67, 70) selon des priorités, seule la puissance nécessaire au fonctionnement de l'unité fonctionnelle considérée (14; 40; 37, 38; 67, 70) étant envoyée à chaque fois à une ou plusieurs unités fonctionnelles (14; 40; 37, 38; 67, 70).

2. Circuit selon la revendication 1, caractérisé en ce que l'organe transversal (13; 35, 36; 59, 53) est un étage de réactance à caractéristique de résistance en courant continu constante.

3. Circuit selon la revendication 1 ou 2, caractérisé en ce que l'organe transversal (13; 35, 36; 59, 53) présente une résistance constante réglable pour courant continu.

4. Circuit selon une ou plusieurs des revendications ci-dessus, caractérisé en ce que l'organe transversal (13; 35, 36; 59, 53) présente une haute impédance pour courant alternatif.

5. Circuit selon une ou plusieurs des revendications ci-dessus, caractérisé en ce que l'organe transversal (13; 35, 36; 59, 53, 60) est commandé par un signal BF, par exemple un signal de sortie de l'amplificateur de micro (62).

6. Circuit selon la revendication 5, caractérisé en ce que le signal BF provenant du micro (10, 31, 64) ou du sélecteur MFV est modulé sur le courant de boucle du circuit d'abonné.

7. Circuit selon la revendication 6, caractérisé en ce que pendant les demi-ondes négatives du signal BF, le courant de boucle passe devant les condensateurs d'appui (69, 71) reliés aux sorties d'alimentation, afin d'empêcher des distorsions non linéaires du signal BF sur la ligne.

8. Circuit selon une ou plusieurs des revendications ci-dessus, caractérisé en ce que le courant de boucle est envoyé aux unités fonctionnelles (14; 40; 37, 38; 67, 70) de manière que les unités prioritaires soient toujours alimentées les premières.

9. Circuit selon une ou plusieurs des revendications ci-dessus, caractérisé en ce qu'un courant maximal

$$I_{nmax} = I_s - \sum_{1}^{n-1} I_n$$

où

$I_s$ = courant de boucle disponible

$I_{nmax}$ = courant du dispositif supplémentair de nième priorité, est envoyé aux unités fonctionnelles (14; 40; 37, 38; 67, 70) de priorité plus faible.

10. Circuit selon une ou plusieurs des revendications ci-dessus, caractérisé en ce qu'il est prévu un circuit de distribution de courant (36, 53) dont on dérive le courant de boucle non nécessaire de la sortie de plus faible priorité.

11. Circuit selon une ou plusieurs des revendications ci-dessus, caractérisé en ce que les sorties (e, f) de basse priorité peuvent être court-circuitées avec le circuit de distribution de courant (36, 53), sans que la caractéristique d'entrée s'en trouve influencée, et sans modifier les courants provenant des sorties (d) de haute priorité.

12. Circuit selon une ou plusieurs des revendications ci-dessus, caractérisé en ce que le circuit de distribution de courant (36, 53) délivre à ses sorties (d, e, f) des tensions qui sont aussi proches que possible de la tension réglée par l'organe transversal (13; 35, 36; 59, 53).

13. Circuit selon une ou plusieurs des revendications ci-dessus, caractérisé en ce que les unités fonctionnelles qui ne peuvent tolérer de coupures de l'alimentation en courant (par exemple processeurs de sélection) sont raccordées aux sorties (d) de haute priorité du circuit de distribution de courant (36, 53).

14. Circuit selon une ou plusieurs des revendications ci-dessus, caractérisé en ce que les unités fonctionnelles qui peuvent absorber des courants trés élevés en fonction de l'état de fonctionnement, par exemple l'étage final de l'amplificateur de haut-parleur, sont raccordées à une sortie de basse priorité limitant le courant.

15. Circuit selon une ou plusieurs des revendications ci-dessus, caractérisé en ce que chaque unité fonctionnelle de haute priorité est alimentée dans chaque cas en tension ou en intensité à sa valeur de consigne, avant qu'une unité de priorité décroissante suivante ne reçoive une tension ou une intensité.

16. Circuit selon une ou plusieurs des revendications ci-dessus, caractérisé en ce qu'il est prévu un dispositif de constante de courante limitant le courant d'alimentation du micro du circuit de conversation (31) de l'appareil téléphonique.

17. Circuit selon une ou plusieurs des revendications ci-dessus, caractérisé en ce que la totalité du courant à distribuer par le circuit de distribution (36) est égale du courant de boucle diminué du courant envoyé au circuit d'écoute et de conversation.

18. Circuit selon une ou plusieurs des revendications ci-dessus, caractérisé en ce qu'il est prévu un équilibreur (3, 26) séparé, en ce qui concerne le courant continu, des fils de conversation (8, 9; 28, 29; 49, 57).

19. Circuit selon une ou plusieurs des revendications ci-dessus, caractérisé en ce que l'organe transversal (35) présente pour l'alimentation d'unités fonctionnelles (40, 37, 38) de plusieurs classes de priorités, un diviseur de tension qui est constitué de deux résistances (43, 44) placées l'une derrière l'autre, en ce qu'un condensateur (90) est monté la prise centrale du diviseur de tension et l'un des branchements (A) de l'organe transversal (35), ce branchement (A) étant relié par une troisième résistance (45) et l'émetteur d'un premier transistor (46), en ce que la base de ce transistor (46) est reliée à l'émetteur d'un deuxième transistor (47), en ce que la base de ce duexième transistor (47) est reliée à l'emetteur d'un troisième transistor (48), et en ce que la base de ce troisième transistor (48) est reliée à la prise centrale du diviseur de tension, les courants destinés à alimenter les unités fonctionnelles étant prélevés aux collecteurs des transistors (46, 47, 48).

20. Circuit selon la revendication 19, caractérisé en ce que le collecteur du troisième transistor (48) est relié à la sortie (B) de l'organe transversal (36).

21. Circuit selon une ou plusieurs des revendications ci-dessus, caractérisé en ce qu'il est prévu comme unité fonctionnelle un amplificateur de haut-parleur et/ou amplificateur "mains libres" (38) dont l'étage final est de classe "B' ou de classe "D".

22. Circuit selon la revendication 21, caractérisé en ce qu'un accumulateur à mémoire (42) est monté en parallèle aux branchements d'alimentation de l'amplificateur de haut-parleur et/ou "mains libres" (38).

23. Circuit selon une ou plusieurs des revendications ci-dessus, caractérisé en ce que le circuit de distribution (36) est un circuit de distribution de courant, et les tensions des courants d'alimentation ne sont pas réglées.

24. Circuit selon une ou plusieurs des revendications ci-dessus, caractérisé en ce que les tensions des courants d'alimentation sont réglées.

25. Circuit selon une ou plusieurs des revendications ci-dessus, caractérisé en ce que la caratéristique d'entrée du courant continu présente des valeurs de résistance de courant continu différentes selon les sections.

26. Circuit selon une ou plusieurs des revendications ci-dessus, caractérisé en ce qu'il est prévu un circuit de conversation avec affaiblissement de l'effect local selon le principe de la compensation.

27. Circuit selon une ou plusieurs des revendications ci-dessus, caractérisé en ce qu'un capteur de courant de boucle (59) et un régulateur shunt (60) sont montés en série, un signal de sortie en courant continu du capteur de courant de boucle (59) étant envoyé au régulateur shunt (60), et en ce que le signal de courant alternatif du micro (64) ou de l'émetteur MFV de l'appareil téléphonique est superposé au signal de sortie en courant continu du capteur de boucle (59), de sorte qu'une modulation du courant continu traversant le régulateur shunt (60) a lieu par le régulateur shunt (60).

28. Circuit selon une ou plusieurs des revendications ci-dessus, caractérisé en ce qu'un diviseur de tension constitué de deux résistances (72, 73) montées en série, est monté entre les fils de conversation (49, 57), la prise centrale de ce diviseur de tension étant reliée à la base d'un premier transistor (74), en ce que le collecteur de ce transistor (74) est relié à l'un des fils de conversation (57), son émetteur étant relié à la base d'un deuxième transistor (75), en ce que la résistance d'émetteur (76) est reliée á l'autre fil de conversation (49), et en ce que les signaux de micro ou MFV sont envoyés à la base du premier transistor (74).

29. Circuit selon une ou plusieurs des revendications ci-dessus, caractérisé en ce qu'à l'un des fils de conversation (57) est raccordé l'émetteur d'une premier transistor (74) dont le collecteur est relié à la base d'un deuxième transistor (75), en ce que la résistance d'émetteur (76) du deuxième transistor (75) est raccordée à l'autre fil de conversation (49), en ce qu'à la base du premier transistor (74) est reliée la sortie d'un amplificateur régulateur (79) dont l'entrée d'inversion est reliée à la prise centrale des deux résistances (80, 81) montées en série, entre la sortie de l'amplificateur régulateur (79) et l'autre fil de conversation (49), et en ce que l'entrée qui n'est pas inversante de l'amplificateur régulateur (79), recevant le signal de micro ou le signal MFV, est reliée à l'émetteur du deuxième transistor (75), par un résistance (78).

30. Circuit selon la revendication 29, caractérisé en ce qu'un passe-bas (77, 91) est monté entre la résistance (78) et l'émetteur du deuxième transistor (75).

31. Circuit selon une ou plusieurs des revendications ci-dessus, caractérisé en ce qu'un circuit en série d'une résistance (83) et d'une diode Zener (84) est monté en parallèle à la résistance (81) située entre la sortie et l'entrée d'inversion de l'amplificateur régulateur (79).

32. Circuit selon la revendication 31, caractérisé en ce que le deuxième transistor (75) est un transistor à multicollecteur, une unité fonctionnelle pouvant être raccordée à chaque collecteur.

33. Circuit selon une ou plusieurs des revendications ci-dessus, caractérisé en ce que la caractéristique d'entrée de courant continu est non linéaire continue.

34. Circuit selon une ou plusieurs des revendications ci-dessus, caractérisé en ce que le courant supplémentair nécessaire est prélevé d'un condensateur (42, 71) pendant une phase de commande de l'étage final de l'amplificateur de haut-parleur ou "mains libres" (38, 70), au cours de laquelle le courant tiré de cet étage final est supérieur au courant qui est fourni par la sortie (e, 66) du circuit de distribution de courant (36, 53).

## EP 0 174 942 B1

**Claims**

1. Circuit arrangement for the electric supply of functional units (14; 40; 37, 38; 67, 70) in a telephone subscriber station, with a transverse member (13; 35, 36; 59, 53, 60) which is provided between the telephone lines and can be connected directly or indirectly to the functional units (14; 40; 37, 38; 67, 70) and which draws the maximum possible power from the loop, characterised in that the transverse member (13; 35, 36; 59, 53, 60) directs the drawn power to the functional units (14; 40; 37, 38; 67, 70) according to priorities so that one or more functional units (14; 40; 37, 38; 67, 70) are supplied in each case only with the power is necessary for the operation of the respective functional unit (14; 40; 37, 38; 67, 70).

2. Circuit arrangement as claimed in claim 1, characterised in that the transverse member (13; 35, 36; 59, 60, 53) is a reactance stage with a constant ohmic resistance characteristic.

3. Circuit arrangement as claimed in claims 1 or 2, characterised in that the transverse member (13; 35, 36; 59, 53) constitutes an adjustable constant resistance for direct current.

4. Circuit arrangement as claimed in one or more of the preceding claims, characterised in that the transverse member (13; 35, 36; 59, 53) constitutes a high impedance for alternating current.

5. Circuit arrangement as claimed in one or more of the preceding claims, characterised in that the transverse member (13; 35, 36; 59, 53, 60) is controllable by an LF signal, e.g. output signal from the microphone amplifier (62).

6. Circuit arrangement as claimed in claim 5, characterised in that the LF signal originating from the microphone (10, 31, 64) or the microphone amplifier selector is modulated upon the loop current of the line circuit.

7. Circuit arrangement as claimed in claim 6, characterised in that during the negative half waves of the LF signal the loop current is directed past the supporting capacitors (69, 71), which are connected to supply outputs, in order to prevent non-linear distortions of the LF signal on the line.

8. Circuit arrangement as claimed in one or more of the preceding claims, characterised in that the loop current is delivered to the functional units (14; 40; 37, 38; 67, 70) according to priorities so that units with higher priority are always supplied first.

9. Circuit arrangement as claimed in one or more of the preceding claims, characterised in that the functional units (14; 40; 37, 38; 67, 70) with lower priority are supplied with a maximum current

$$I_{nmax} = I_s - \sum_{1}^{n-1} I_n$$

in which

$I_s$ = available loop current

$I_{nmax}$ = current of the additional device with nth priority.

10. Circuit arrangement as claimed in one or more of the preceding claims, characterised in that a current distribution circuit (36, 53) is provided, and from the output thereof the loop current which is not required is led away with the lowest priority.

11. Circuit arrangement as claimed in one or more of the preceding claims, characterised in that the low-priority outputs (e, f) of the current distribution circuit (36, 53) can be short-circuited without the input characteristic being influenced thereby and without the currents flowing off at the higher-priority outputs (d) being altered.

12. Circuit arrangement as claimed in one or more of the preceding claims, characterised in that the current distribution circuit (36, 53) delivers at its outputs (d, e, f) voltages which are as near as possible to the voltage set by the transverse member (13; 35, 36; 59, 53).

13. Circuit arrangement as claimed in one or more of the preceding claims, characterised in that functional units (e.g. selection processors) which cannot tolerate any interruption of the current supply are connected to the higher-priority outputs (d) of the current distribution circuit (36, 53).

14. Circuit arrangement as claimed in one or more of the preceding claims, characterised in that functional units which depending upon the operating state can consume very high currents, e.g. the end stage of the sound hearing amplifier, are connected to a current-limiting output with lower priority.

15. Circuit arrangement as claimed in one or more of the preceding claims, characterised in that each functional unit with higher priority is supplied voltage or current at its theoretical value in each case before a unit with the next lower priority receives voltage or current.

16. Circuit arrangement as claimed in one or more of the preceding claims, characterised in that a current stabiliser is provided which limits the supply current of the microphone of the speaker circuit (31) of the telephone set.

17. Circuit arrangement as claimed in one or more of the preceding claims, characterised in that all of the current to be distributed by the distribution circuit (36) is equal to the loop current minus the current delivered to the hearing and speaking circuit.

18. Circuit arrangement as claimed in one or more of the preceding claims, characterised in that a line balance (3, 25) is provided which is separated in direct current terms from the speaking wires (8, 9; 28, 29; 49, 57).

19. Circuit arrangement as claimed in one or more of the preceding claims, characterised in that for the

14

supply of functional units (40, 37, 38) of many levels of priority the transverse member (35) has a voltage divider which consists of two resistors (43, 44) connected one behind the other; a capacitor (90) is connected between the central pick-up of the voltage divider and one terminal (A) of the transverse member (35), this terminal (A) being connected by a third resistor (45) and the emitter of a first transistor (46); the base of this transistor (46) is connected to the emitter of a second transistor (47); the base of this second transistor (47) is connected to the emitter of a third transistor (48); and the base of this third transistor (48) is connected to the central pick-up of the voltage divider, the currents for supplying the functional units being collected on the collectors of the transistors (46, 47, 48).

20. Circuit arrangement as claimed in claim 19, characterised in that the collector of the third transistor (48) is connected to the output (B) of the transverse member (36).

21. Circuit arrangement as claimed in one or more of the preceding claims, characterised in that a sound hearing and/or free speaking amplifier (38) in which the end stage is constructed as a class "B" end stage or a class "D" end stage is provided as a functional unit.

22. Circuit arrangement as claimed in claim 21, characterised in that a storage capacitor (42) is connected parallel to the supply connections of the sound hearing and or free speaking amplifier (38).

23. Circuit arrangement as claimed in one or more of the preceding claims, characterised in that the distribution circuit (36) is a current distribution circuit and the voltages of the supply currents are unregulated.

24. Circuit arrangement as claimed in one or more of the preceding claims, characterised in that the voltages of the supply currents are regulated.

25. Circuit arrangement as claimed in one or more of the preceding claims, characteristic in that the direct current input characteristic has ohmic resistance values which differ in stages.

26. Circuit arrangement as claimed in one or more of the preceding claims, characterised in that a speaking circuit is provided which has side-tone attenuation according to the compensation principle.

27. Circuit arrangement as claimed in one or more of the preceding claims, characterised in that a loop current sensor (59) and a shunt regulator (60) are connected in series, a direct current output signal from the loop current sensor (59) being delivered to the shunt regulator (60), and the alternating current signal of the microphone (64) or the microphone amplifier transmitter of the telephone set is superimposed on the direct current output signal from the loop sensor (59) so that the direct current flowing through the shunt regulator (60) is modulated by the shunt regulator (60).

28. Circuit arrangement as claimed in one or more of the preceding claims, characterised in that a voltage divider consisting of a series arrangement of two resistors (72, 73), whose central pick-up is connected to the base of a first transistor (74), is connected between the speaking wires (49, 57), the collector of this transistor (74) is connected to one speaking wire (57) whose emitter is connected to the base of a second transistor (75), the emitter resistance (76) is connected to the other speaking wire (49), and the microphone or microphone amplifier signals are delivered to the base of the first transistor (74).

29. Circuit arrangement as claimed in one or more of the preceding claims, characterised in that the emitter of a first transistor (74), the collector of which is connected to the base of a second transistor (75), is connected to one speaking wire (57), the emitter resistance (76) of the second transistor (75) is connected to the other speaking wire (49), the output of a variable-gain amplifier (79) is connected to the base of the first transistor (74), the inverting input of the said variable-gain amplifier being connected to the central pick-up of the series arrangement of two resistors (80, 81) between the output of the variable-gain amplifier (79) and the other speaking wire (49), and the non-inverting input of the variable-gain amplifier (79) which is acted upon by the microphone or microphone amplifier signal is connected via a resistor (78) to the emitter of the second transistor (75).

30. Circuit arrangement as claimed in claim 29, characterised in that a low pass (77, 91) is connected between the resistor (78) and the emitter of the second transistor (75).

31. Circuit arrangement as claimed in one or more of the preceding claims, characterised in that a series arrangement of a resistor (83) and a zener diode (84) is connected in parallel with the resistor (81) lying between the output and the inverting input of the variable-gain amplifier (79).

32. Circuit arrangement as claimed in claim 31, characterised in that the second transistor (75) is constructed as a multi-collector transistor, and a functional unit can be connected to each collector.

33. Circuit arrangement as claimed in one or more of the preceding claims, characterised in that the direct current input characteristic is always non-linear.

34. Circuit arrangement as claimed in one or more of the preceding claims, characterised in that during such a control phase of the end stage of the sound hearing or free speaking amplifier (38, 70), in which the current drawn from this end stage exceeds the current supplied by the output (e, 66) of the current distribution circuit (36, 53), the additonally required current is drawn from a capacitor (42, 71).

FIG.1

FIG. 2

FIG. 3

## FIG. 4

## FIG. 5

# FIG. 6

# FIG. 7

EP 0 174 942 B1

FIG. 8

FIG. 9

FIG. 10

4